# EUROPEAN PATENT APPLICATION

(11) **EP 1 736 460 A1**
(43) Date of publication of application: **27.12.2006**
(21) Application number: 05105505.1
(22) Date of filing: 21.06.2005
(51) Int. Cl.: C04B 41/50, C04B 41/49

(54) **Mineral comprising coated substrates**

(71) Applicant: Akzo Nobel Coatings International B.V., 6824 BM Arnhem (NL)
(72) Inventor: Piovesan, Luca, 31100, Treviso (IT); Pepe, Diego, 31021, Mogliano Veneto (IT)
(74) Representative: Schalkwijk, Pieter Cornelis

(57) **Abstract**

The invention relates to reconstituted mineral comprising substrates coated with a composition comprising silica and/or alumina particles, a substantially silicon-free polymerisable compound, and a silane.

## Description

The present invention relates to a process for coating reconstituted mineral comprising substrates, such as tiles and panes made from minerals mixed with resins, and the coated substrates thus obtained. In particular, it relates to the coating of decorated and undecorated tiles and panels made from minerals and resins that can be used as interior tiles and panels.

The substrates preferably are fire proof, water proof, and mechanical stress-proof. The substrates can, for example, be panels, tiles, or brickwork. The substrates comprise minerals and one or more resins. Preferably the substrates comprise a relatively low amount of resin, most preferably the substrates comprise only 5 to 10 weight percent of resin. A method of preparing such substrates is, for example, described in WO 02/094523. The substrates can, for example, be used for floorings, staircases, coverings, furniture, kitchen surfaces, tables, and benches. When rubber granules or (recycled) plastic materials have been added to the minerals and resins during the production of the substrates, high characteristics of acoustic insulation are achieved, which allow using the substrates also for floors of suspended or floating type, with suitable female-male connections.

The substrates can be prepared by mixing terracotta granules, or granules made of other minerals, with one or more resins. The resins preferably are bi-component or thermosetting resins. A bi-component resin can, for example, comprise of a resin and a hardener (curing agent) for the resin. Preferably, the bi-component resin is a combination of an isocyanate, e.g. MDI, and a polyol. The mixture is distributed with a dosing device on a plan, in such a way to form a layer of desired thickness. The layer is then inserted between the heated surfaces of a press, where the resin polymerizes. The hardening of the resin can be caused by or accelerated by pressure and/or heat, but curing without pressure at room temperature is also possible. In particular, the substrates can be constituted by mixing wastes of grinded bricks, preferably granules prepared of wastes of grinded bricks, with one or more resins. Additionally, or alternatively, granules made of different minerals are mixed with one or more resins.

Different minerals and/or granules of minerals, and optionally rubber granules and/or (recycled) plastic material and/or fiber glass may be combined to adjust the properties of the substrate, for example the bulk properties. Also special finishes can be obtained, such as marble or granite type finishes. The top layer, or superficial portion, of the substrate may comprise different material(s) than the bulk of the substrate; the top layer of the substrate may for example comprise different mineral material(s) than the bulk of the substrate. The superficial portion of the substrate may, for example, comprise brick powder, to achieve a brick finishing. Another example of a special finish is the use of different mineral granules to achieve a marble or granite type effect.

The substrates, for instance tiles or panels, can be used in buildings, on ships, as floorings, also floating, or as inner or external coverings of large surfaces, for example simulating the effects of the visible bricks with varied decorative patterns. The panels can be pantograph carved, for carrying out different throated, inclined or sloped connections, or straight or rounded grooves, or ornamental patterns.

Deepening the incisions through a numerical control pantograph up to consume the whole rigid layer, the panels can be made suitable to be stuck on curved surfaces, such as columns of reinforced concrete, internal spiral staircases, arcs and vaults generally. Grids of different shape and dimension can be made as well. Using shaped molds, panels already having cuts can be made.

The panels can be cut, squared and predisposed for joints, in the same way as MDF panels. By agglomerating light minerals, such as pumice, pearlite, aluminium silicate or hollow glass 25 microspheres, with inner stiffening frames, shaped panels with different thickness can be carried out, with rusticated ashlars or other decorative elements, usable for false ceilings, for flame trap or other.

The surface(s) of the substrates can be coated with melaminic sheets, or with ready laminated plastic, which are heat included into panels so manufactured already melaminic coated. The panel can, additionally or alternatively, be afterwards finished on the surface with decorations and heat and cold ceramic enamels or suitable varnishes.

Preferably, the substrates are coated with a coating composition comprising silica particles and/or alumina particles, a substantially silicon-free polymerisable compound, and a silane of the general formula:

R¹-Si(OR)₃

wherein
- R¹ is a substantially silicon-free polymerisable group
- R is a hydrocarbon radical.
   In a preferred embodiment, the coating composition is applied as top coat. The coating composition may be applied directly to the substrate, but preferably one or more (different) coating layers are applied before the coating composition is applied as top coat.

In principle, there is no restriction with regard to the (top) coating compositions that can be used on the substrates, as long as curing at high temperatures, i.e. above 200°C, is not necessary. Preferably, coatings are used that can be cured at even lower temperatures, preferably below 150°C, more preferably below 100°C, even more preferably below 70°C.

Examples of suitable curing mechanisms for the (top) coating composition include oxidative drying systems and polyurethane systems, for instance carbonate/amine systems and isocyanate cured systems, such as hydroxyl/isocyanate, amine/isocyanate, thiol/isocyanate, malonate/isocyanate, ketimine/isocyanate and aldimine/isocyanate. The (top) coating composition may be curable by Michael reaction. Examples of these are melamine cured systems, acryloyl/amine, acryloyl/acetoacetate, acryloyl/malonate, acryloyl/thiol, and acryloyl/ketimine systems. Other activated double bond containing monomers instead of acryloyl can be used as well. Further examples of suitable curing mechanisms are epoxy/amine, epoxy/hydroxy and epoxy/thiol systems, and epoxy/acid systems, which can be used in powder coatings. Also amine/malonate, amine/acetoacetate anhydride/amine, anhydride/hydroxyl systems and variants using blocked hydroxyls or amines may be used. Examples of radiation curable systems are cationically curing epoxy systems, vinylether systems, and radically cured systems such as (meth)acryloyl based, maleate/vinylether or thiol/ene systems.

A primary concern in the coating industry is the need to reduce the amount of solvent released during the drying and curing of coating compositions. Therefore, preference is given to the use of a high solids solvent borne coating composition, a waterborne coating composition, a UV- or EB-curable coating composition, optionally comprising a reactive diluent, or a hot melt coating composition. Since the manufacture of coated substrates according to the present invention on an industrial scale preferably takes place within a relatively short time, the curing and drying time of the (top) coating composition should be as short as possible. Heating the substrate can accelerate the curing and drying of the coating composition. Preferably, radiation curable coating compositions that can be cured in a reasonably short time are used. Within the framework of the present invention, a radiation curable coating composition is a coating composition that is cured using electromagnetic radiation having a wavelength λ ≤ 500 nm or electron beam radiation. An example of electromagnetic radiation having a wavelength λ ≤ 500 nm is, e.g., UV radiation.

The (top) coating composition comprises silica particles and/or alumina particles, a substantially silicon-free polymerisable compound, and a silane of the general formula: R¹-Si(OR)₃, wherein R¹ is a substantially silicon-free polymerisable group and R is a hydrocarbon radical. In a preferred embodiment of the invention, the composition comprises silica particles. In a more preferred embodiment the silica particles are nano-particles. Preferably, any alumina particles present in the composition are nano-particles. Optionally, the (top) coating composition comprises a diluent, for instance to obtain a suitable application viscosity. The (top) coating composition can be applied to the substrate by conventional means, such as by curtain coater, spray nozzle, roller coater, or by flow coater.

The silane is capable of polymerising with the substantially silicon-free polymerisable compound in the coating composition. In other words, the substantially silicon-free polymerisable group R¹ is reactive towards the polymerisable compound. The group R of the silane preferably is a methyl or ethyl radical. R¹ may have a group that is capable of taking part in a radical polymerisation reaction or it may have a isocyanate-reactive functional group, or it may be cured via another mechanism, e.g. (pseudo)-Michael addition. Preferably, R¹ is a radiation curable group. Thus silanes with an R¹ group having at least one olefinically unsaturated bond are suitable in radiation curable coating compositions.

Unlimitative examples of suitable R¹ groups are carbonyl-functional groups, amine-functional groups, amide-functional groups, oxidatively drying groups such as fatty acid groups, malonate groups, acetoacetate groups, hydroxy-functional groups, isocyanate-functional groups, mercapto-functional groups, vinylether groups, carbonate-functional groups, anhydride-functional groups, and epoxy-functional groups. Blocked versions of the aforementioned groups may be used as well. Preferably, R¹ consists of an acryloxy-functional group, a vinyl-functional group, or a glycidoxy-functional group. Vinylsilanes that were found to be very suitable in radiation curable coating compositions according to the present invention are of the general formula: H₂C=CH-Si(OR)₃, wherein R is a methyl or ethyl radical.

The polymerisable compound in the (top) coating composition should be substantially silicon-free. As stated above, acrylic-functional polysiloxanes, such as described in US 6,136,383, are not suitable. When for instance Crodamer UVS-500 (an acrylic-functional polysiloxane obtainable from Croda) is used, the coat shows poor scratch resistance. In principle, any substantially silicon-free polymerisable compound or mixture of polymerisable compounds can be used in the (top) coating compositions. This polymerisable compound is present in an amount of 5 to 80 wt.%, based on the total weight of the coating composition. Preferably, the polymerisable compound is present in an amount of 15 to 70 wt.%, more preferred is an amount of 30 to 60 wt.%, based on the total weight of the (top) coating composition.

The polymerisable compound can be a monomer, polymer, or oligomer. In principle, there is no restriction with regard to the curing reactions in which the polymerisable compound can take part. Suitable polymerisable compounds are, optionally in the presence of a cross-linker, reactive towards themselves. Appropriate polymerisable compounds have at least one functional group which, optionally in the presence of a cross-linker, is capable of reacting with the R¹ group of the silane in the (top) coating composition. Unlimitative examples of suitable polymerisable compounds are compounds having two or more functional groups like isocyanate groups, hydroxy groups, amine groups, oxidatively drying groups such as fatty acid groups, carbonyl groups, vinylether groups, epoxy groups, malonate groups, acetoacetate groups, carbonate groups, and anhydride groups. Blocked versions of the aforementioned groups may be used as well. Other examples of suitable polymerisable compounds are compounds having one or more acrylate groups, blocked or not. Thus suitable polymerisable compounds are for instance polyesters, polyacrylates, polyisocyanates, polyurethanes, alkyd resins, polyepoxy compounds, polyethers and polyamines.

Examples of at least difunctional isocyanate compounds include aliphatic, cycloaliphatic or aromatic di-, tri- or tetraisocyanates which may be ethylenically unsaturated or not, such as:
1,2-propylene diisocyanate, trimethylene diisocyanate, tetramethylene diisocyanate, 2,3-butylene diisocyanate, hexamethylene diisocyanate, octamethylene diisocyanate, 2,2,4-trimethyl hexamethylene diisocyanate, 2,4,4-trimethyl hexamethylene diisocyanate, dodecamethylene diisocyanate, ω,ω'-dipropyl ether diisocyanate, 1,3-cyclopentane diisocyanate, 1,2-cyclohexane diisocyanate, 1,4-cyclohexane diisocyanate, isophorone di-isocyanate, 4-methyl-1,3-diisocyanatocyclohexane, trans-vinylidene diisocyanate, dicyclohexyl methane-4,4'-diisocyanate, 3,3'-dimethyl dicyclohexyl methane-4,4'-diisocyanate, a toluene diisocyanate, 1,3-bis(isocyanatomethyl)benzene, a xylene diisocyanate, 1,5-dimethyl-2,4-bis(isocyanatomethyl)benzene, 1,5-dimethyl-2,4-bis(2-isocyanatoethyl)-benzene, 1,3,5-triethyl-2,4-bis(isocyanatomethyl)-benzene, 4,4'-diisocyanatodiphenyl, 3,3'-dichloro-4,4'-diisocyanatodiphenyl, 3,3'-diphenyl-4,4'-diisocyanatodiphenyl, 3,3'-dimethoxy-4,4'-diisocyanatodiphenyl, 4,4'-diisocyanatodiphenyl methane, 3,3'-dimethyl-4,4'-diisocyanatodiphenyl methane, a diisocyanatonaphthalene, the adduct of 2 molecules of a diisocyanate, e.g. hexamethylene diisocyanate or isophorone diisocyanate, to a diol such as ethylene glycol, the adduct of 3 molecules of hexamethylene diisocyanate to 1 molecule of water (available under the trade designation Desmodur^{®}N of Bayer^{®}), the adduct of 1 molecule of trimethylol propane to 3 molecules of toluene diisocyanate (available under the trade designation Desmodur^{®}L of Bayer^{®}), the adduct of 1 molecule of trimethylol propane to 3 molecules of isophorone diisocyanate, compounds such as 1,3,5-triisocyanatobenzene and 2,4,6-triisocyanatotoluene, and the adduct of 1 molecule of pentaerythritol to 4 molecules of toluene diisocyanate. Preferably, an aliphatic or cycloaliphatic di- or triisocyanate having 8-36 carbon atoms is employed.

Typical examples of compounds containing at least 2 acryloyl or methacryloyl groups include the (meth)acrylic esters of di-, tri- or polyvalent polyols, including polyester polyols and polyether polyols; adducts of, on the one hand, a hydroxyl group-containing (meth)acrylic ester of a polyol to, on the other hand, an at least difunctional isocyanate compound; and adducts of (meth)acrylic acid to an at least difunctional epoxy compound.

Examples of suitable at least difunctional, solid or liquid epoxy compounds include the di- or polyglycidyl ethers of (cyclo)aliphatic or aromatic hydroxy compounds such as ethylene glycol, glycerol, cyclohexane diol, mononuclear di- or polyvalent phenols, bisphenols such as Bisphenol-A and Bisphenol-F, and polynuclear phenols; glycidyl ethers of fatty acids having, say, 6-24 carbon atoms; glycidyl(meth)acrylate; isocyanurate group-containing epoxy compounds, an epoxydised polybutadiene; hydantoin epoxy resins; epoxy resins obtained by epoxydising aliphatic and/or cycloaliphatic alkenes, such as dipentene dioxide, dicyclopentadiene dioxide, and vinylcyclohexene dioxide, and glycidyl groups-containing resins such as polyesters or polyurethanes containing one or more glycidyl groups per molecule, or mixtures of the aforesaid epoxy resins.

Preferably, a radiation curable resin or mixture of resins is used as polymerisable compound. Urethane acrylates were found to be very suitable for use in the coating composition. Examples of suitable commercially available urethane acrylate resins are: Ebecryl 210, Ebecryl 2000, Ebecryl 5129, Ebecryl 8800 (all ex UCB), CN 934, CN 976, CN 981 (all ex Cray Valley), Genomer 4258, Genomer 4652, and Genomer 4675 (all ex Rahn). A mixture of a urethane acrylate with a polyethylene wax or a polypropylene wax was also found to be suitable.

A cationic UV-curable system can also be used in the coating composition. Such a system can be based on, for example, cycloaliphatic epoxides or cycloaliphatic epoxyacrylates. Examples of commercially available cationic UV-curable materials are: Uvacure 1500, Uvacure 1501, Uvacure 1502, Uvacure 1530, Uvacure 1531, Uvacure 1532, Uvacure 1533 (all ex UCB), Cyracure UVR 6105, Cyracure UVR 6110, and Cyracure UVR 6128 (all ex Union Carbide). As curing initiators for these systems can be used, for instance, UVI 6976, UVI 6992, and UVI 8892 (all ex Union Carbide).

Polyesteracrylate resins can also be used in the (top) coating composition. Examples of suitable commercially available polyesteracrylate resins are: Crodamer UVP-215, Crodamer UVP-220 (both ex Croda), Genomer 3302, Genomer 3316 (both ex Rahn), Laromer PE 44F (ex BASF), Ebecryl 800, Ebecryl 810 (both ex UCB), Viaktin 5979, Viaktin VTE 5969, and Viaktin 6164 (100%) (all ex Vianova).
Epoxyacrylate resins can also be used in the (top) coating composition. Examples of commercially available epoxyacrylate resins are: Crodamer UVE-107 (100%), Crodamer UVE-130 (both ex Croda) Genomer 2254, Genomer 2258, Genomer 2260, Genomer 2263 (all ex Rahn), CN 104 (ex Cray Valley), and Ebecryl 3500 (ex UCB).
Polyetheracrylate resins can also be used in the (top) coating composition. Examples of commercially available polyetheracrylate resins are: Genomer 3456 (ex Rahn), Laromer P033F (ex BASF), Viaktin 5968, Viaktin 5978, and Viaktin VTE 6154 (all ex Vianova).

The amount of silane and the amount of silica particles mainly determine the silica content of the coating composition. The silica content is expressed as a percentage by weight of the total weight of the (top) coating composition, and is determined through oven pyrolysis at 800°C. The total silica content is preferably up to 30% by weight, and more preferably 5 - 25% by weight. Optimum results are obtained in the range of 17 - 23% total silica by weight.

The silica and/or alumina particles preferably have an average diameter of between 5 and 100 nm, more preferably between 15 and 75 nm, and even more preferably between 25 and 50 nm. Optimum results have been obtained with a combination of silica and/or alumina particles having an average particle size of 25 and 50 nm.

As stated above, the coating composition preferably comprises a vinylsilane of the general formula: H₂C=CH-Si(OR)₃ wherein R is a methyl or ethyl radical. If such a vinylsilane is used, the preferred quantity of vinylsilane is between 0.2 gram and 1.25 grams per gram of initial dry silica and/or alumina. More preferably, the quantity of vinylsilane is between 0.3 gram and 0.65 gram.

Suitable products that can be used when preparing a composition comprising silica particles are XP/21/1372, XP/21/0930, XP/21/0793, XP/21/0768 and XP/21/0396 (all ex Hanse Chemie), Laromer PO 9086V and Laromer PO 9027V (ex BASF).

Other examples of suitable commercially available compositions that can be used for the preparation of the (top) coating composition are Highlink OG 1, Highlink OG 2, Highlink OG 4, Highlink OG 5, Highlink OG 8, Highlink OG 100, Highlink OG 101, Highlink 103, Highlink 103-53, Highlink OG 108, Highlink OG 108-32, Highlink OG 113, Highlink OG 120, Highlink OG 130, Highlink OG PO 33F, Highlink OG VTE 5968, Highlink OG 200, Highlink OG 202, Highlink OG 401, Highlink OG 502, and Highlink OG 601 (all ex Clariant). These compositions contain a vinylsilane, silica particles, and a diluent.

A suitable product that can be used when preparing a composition comprising alumina particles are NanoByk 3601, NanoByk 3602 (ex BYK Chemie).

The (top) coating composition may comprise different (commercially available) silica particles and/or alumina particles.

Optionally, the (top) coating composition comprises a diluent. If a diluent is used, it can be either reactive or non-reactive towards the other components in the coating composition. Preferably, the (top) coating composition comprises one or more reactive diluents. Such a reactive diluent, optionally in the presence of a cross-linker, is at least reactive towards the polymerisable compound. The reactive diluent, optionally in the presence of a cross-linker, may also be reactive towards the R¹ group of the silane in the coating composition. Preferably, the diluent is substantially silicon free. Unlimitative examples of suitable diluents are compounds having one or more amine groups, oxidatively drying groups, vinylether groups, malonate groups, acetoacetate groups, mercapto groups, epoxy groups, carbonyl groups, isocyanate groups, hydroxy groups, carbonate groups, or anhydride groups.

In general, oligomeric versions of polymerisable compounds are suitable as diluents in curable systems according to the invention. Examples of suitable diluents for urethane systems are low-viscosity diols and diamines, optionally blocked. For epoxy systems (cyclo)aliphatic mono- and bi-epoxies may be used as diluents. In the case of a radiation curable (top) coating composition, compounds suitable as reactive diluents generally are ethylenically unsaturated compounds. As representative examples of such may be mentioned the compounds disclosed in EP-A-0 965 621. The reactive diluent preferably has a molecular weight of from about 80 to about 800, more preferably about 100 to about 400. Compounds meeting the molecular weight requirement are suitable for lowering the viscosity of the coating composition. Preferably, reactive diluents are used in an amount of 0 to 50 wt.% on solid resin, more preferably 10 to 40 wt.%.

Examples of monofunctional reactive diluents include the esters of acrylic and methacrylic acid, such as methyl (meth)acrylate, ethyl (meth)acrylate, propyl (meth)acrylate, isopropyl (meth)acrylate, butyl (meth)acrylate, isobutyl (meth)acrylate, tertiary butyl (meth)acrylate, neopentyl (meth)acrylate, isopentyl (meth)acrylate, n-hexyl (meth)acrylate, isohexyl (meth)acrylate, n-heptyl (meth)acrylate, iso-heptyl (meth)acrylate, octyl (meth)acrylate, iso-octyl (meth)acrylate, 2-ethylhexyl (meth)acrylate, nonyl (meth)acrylate, iso-nonyl (meth)acrylate, decyl (meth)acrylate, iso-decyl (meth)acrylate, undecyl (meth)acrylate, iso-undecyl (meth)acrylate, dodecyl (meth)acrylate, iso-dodecyl (meth)acrylate, tridecyl (meth)acrylate, iso-tridecyl (meth)acrylate, tetradecyl (meth)acrylate, iso-tetradecyl (meth)acrylate, and mixtures thereof. Moreover, the aforesaid esters of acrylic and methacrylic acid may contain radiation-reactive unsaturation in the alcohol radical as well. Additional monofunctional radiation-sensitive compounds which may be used as a reactive diluent include diallyl maleate, diallyl fumarate, vinyl acetate, and N-vinyl-2-pyrrolidone, especially the last compound.

The preferred reactive diluents in the (top) coating composition are those having more than one radiation sensitive bond. Such compounds ordinarily are the esters of acrylic or methacrylic acid and a polyhydric alcohol. Further suitable reactive diluents are urethane acrylates, melamine acrylates, epoxy-acrylic acid adducts, and reactive diluents containing polyethylene oxide. Examples of the aforesaid difunctional diluents are ethylene glycol diacrylate and dimethacrylate; isopropylene and propylene glycol diacrylate and dimethacrylate. Similarly, the diol diacrylates and dimethacrylates of butane, pentane, hexane, heptane, and so forth up to and including thirty-six carbon diols are useful in the present coats as reactive diluents.

Tripropylene glycol diacrylate, trimethylolpropane ethoxytriacrylate, 1,6-hexanediol diacrylate, monofunctional vinylacrylate, and mixtures thereof were found to be very suitable for radiation curable coating compositions according to the present invention. Coating compositions comprising 1,6-hexanediol diacrylate are most preferred, as they result in coats with optimal chemical and detergent resistance.

Optionally, curing agents such as acid or base catalysts, metal compounds, radical initiators, or photoinitiators are added to the (top) coating composition. Photoinitiators or a mixture of photoinitiators will be suitable in radiation curable compositions. In general, when electron beam radiation is used to cure the composition, it is not necessary to add a photoinitiator. When UV radiation is used, in general a photoinitiator is added. Preferably non-yellowing photoinitiators are used.

Examples of suitable photoinitiators that can be used in radiation curable coating compositions according to the present invention are benzoin ether (Esacure^{®} ex Fratelli Lamberti), benzyl dimethyl ketone acetal (Irgacure^{®} 651 ex Ciba), 1-hydroxy cyclohexyl phenyl ketone (Irgacure^{®} 184 ex Ciba), 2-hydroxy-2-methyl-1-phenyl propane-1-one (Darocur^{®} 1173 ex Ciba), 1-(4-isopropyl phenyl)-2-hydroxy-2-methyl propane-1-one (Darocur^{®} 1116 ex Ciba), diethoxyacetophenone (DEAP^{®} ex Upjohn), methyl thioxanthone (Quantacur^{®} ex Shell), 2,4,6-trimethylbenzoyl diphenyl phosphine oxide (Lucirin TPO^{®} ex BASF), and the bisphosphine oxides such as CGI^{®} 819 and CGI^{®} 403 ex Ciba. It is also possible to use copolymerisable bimolecular photoinitiators or maleimide-functional compounds. Co-initiators such as amine based co-initiators may also be present in the radiation curable coating composition. Also, daylight cure photoinitiators can be used.

Although the total amount of photoinitiator in the (top) coating composition is not critical, it should be sufficient to achieve acceptable curing of the coating composition when it is irradiated. However, the amount should not be so large that it affects the properties of the cured coating in a negative way. In general, the composition should comprise between 0.1 and 10 wt.% of photoinitiator, calculated on the total weight of the composition when electromagnetic radiation having a wavelength λ ≤ 500 nm is used to cure the coat.

The (top) coating composition may also contain one or more fillers or additives. The fillers may be any fillers known to those skilled in the art, e.g., barium sulphate, calcium sulphate, calcium carbonate, silicas or silicates (such as talc, feldspar, and china clay). Additives such as stabilisers, antioxidants, levelling agents, anti-settling agents, matting agents, rheology modifiers, surface-active agents, amine synergists, halogen-free fire retardants, waxes, or adhesion promoters may also be added. In general, the coating composition according to the present invention comprises 0 to 50 wt.% of fillers and/or additives, calculated on the total weight of the coating composition.

The (top) coating composition may also contain one or more pigments. Any pigments known to those skilled in the art may be used in the coating composition. In the case of a UV curable coating composition, care should be taken that the pigment does not show a too high absorption of the radiation used to cure the composition. In general, the coating composition according to the present invention comprises 0 to 40 wt.% of pigment, calculated on the total weight of the (top) coating composition.

In one embodiment, the process of the present invention is used to apply the coating composition as a top coat. In general, the covered or uncovered substrates will be coated with a primer coating and/or a sealer coating prior to being coated with the top coating. The purpose of the primer is to improve adhesion. Sealer layers are applied to obtain a smooth coating film on the substrate before the top coat of the present invention is applied. In some cases it may be advantageous to apply a (putty) filler composition; fillers are normally used to fill relatively large holes or uneven areas in a substrate. Optionally, one or more other coating layers, so-called intermediate coating layers, are applied on top of the smooth coating film on the substrate before the top coat is applied. This is done, for example, to get a better adhesion of the top coat or to obtain a top coat with special properties.

In principle, there is no restriction as to the coating compositions that can be used for the coating layer(s), as long as there is good adhesion between the coating layer(s) and the coating film on top of the substrate. Both pigmented and pigment-free coating compositions can be used. In principle, the same types of coating compositions can be used for the optional primer, sealer, and intermediate coating layer(s) as for the top coat layer, although the composition of these coating layer(s) and of the top coating composition need not be the same.

In case a primer coating is used, it preferably is an adhesion primer based on silane compounds, for example a thermosetting silane based adhesion primer. More preferably, a primer coating is used that is based on acrylate monomers and acrylate resin(s). The acrylate resin preferably is an epoxy resin or a urethane acrylate, or a mixture thereof. Such acrylate based primer coating composition preferably is a UV curable primer coating composition. In a highly preferred embodiment, a UV curable primer coating composition comprising acrylate monomers and epoxy and/or urethane resin is used which is cured with one or more isocyanic type resins, for example an isocyanate functional oligomer.

The primer, sealer, and intermediate coating layer(s) can be applied to the covered or uncovered substrate by conventional means, such as by curtain coater, spray nozzle, roller coater, or flow coater. The filler coating may be applied by a knife. The primer, sealer, and/or intermediate coating compositions preferably are UV curable, even more preferably, all these layers are UV curable. Most preferably, one or more of these layers are acrylate based UV curable compositions. Also the filler preferably is a UV curable composition and even more preferably is an acrylate based UV curable composition.

To obtain a suitable application viscosity of the primer, sealer, and intermediate coating layer(s), well-known diluents can be used. In the case of UV-curable compositions, UV-curable monomers can be added as viscosity reducing agents and reactive oligomers. Examples of these reactive oligomers are tripropylene glycol diacrylate, trimethylolpropane ethoxytriacrylate, 1,6-hexanediol diacrylate, 2-hydroxyethyl methacrylate, monofunctional vinylacrylate, and mixtures thereof.

The coating compositions may further comprise other ingredients, additives or auxiliaries, such as other polymers or polymer dispersions, pigments, dyes, emulsifiers (surfactants), pigment dispersion aids, levelling agents, anti-cratering agents, anti-foaming agents, anti-sagging agents, halogen-free fire retardants, heat stabilisers, UV-absorbers, antioxidants, and fillers.

Optionally, a printing process may be added to the coating process. A print can be applied to the substrate before the top coat is applied. This can be done to obtain a substrate with a special surface structure, colouring, or texture. Thus the substrate may be printed prior to the application of the second sealer layer. It is also possible to apply a silk screen printing to a clear or to a coloured sealer layer, followed by application of the top coating composition. In case a coloured sealer layer is applied, the in-depth curing is preferably increased with isocyanic type resins. Optionally, an intermediate coating layer may be pigmented. In the case of a radiation curable pigmented intermediate coat, EB-curing would be preferred to UV-curing,

For the coating of substrates in an industrial process, preference is given to a process where all coating and curing steps are performed on a single production line. In such a process the substrate is placed on a belt which moves at a continuous speed. The substrate is then optionally coated with primer, sealer, and/or intermediate coating layer(s), heated or treated in another way to cure the optionally present layer(s), optionally printed, coated with the top coating composition of the present invention, and heated or treated in another way to cure the top coat.

It further is feasible to apply the coating composition according to the present invention to substrates that are covered with a pattern. This pattern may for instance comprise or consist of paper print, silk screen, or plastic, e.g. polyvinyl chloride, polyethylene, or polypropylene. In WO 00/03851 a process for covering the face of a tile or brick support is disclosed. In this process, a layer of glue is spread over at least a portion of the face of a tile, followed by applying a covering. The covering may consist of a synthetic resin film, e.g. polyvinyl chloride, or a paper sheet. After adhesion of the covering, the covering is optionally plastered, painted, dried, and finally finished. Finishing can take the form of glass-papering and/or brushing and/or polishing.

If substrates covered with polyvinyl chloride are coated, the coating will need some flexibility to be able to accommodate the flexibility of the polyvinyl chloride sheet. Preferably, the flexibility of the applied coating layers is reduced towards the top, and finally the abrasion resistant top coat is applied.

The substrates may be used as for instance wall tiles, e.g. in a kitchen or a bathroom, or as floor tiles.

Substrates coated with the coating show heat and fire resistance, particularly when heated or fired perpendicular to the coated surface. Additionally, the substrates coated with the coating show chemical resistance to substances such as acids, bases, and household detergents. The coating has a pencil hardness of 9H, which refers to the highest level on the scale. When the amount of silica and/or alumina is decreased, the hardness decreases. A composition without silica and/or alumina results in a coat with a pencil hardness of 3-4H (ASTM D3363-00). The coated substrates show good steam resistance, and good heat resistance in dry and in wet condition. The scratch and abrasion resistance of the coated substrates was tested using a so-called PEI test. The PEI test was performed in accordance with EN ISO 10545.7 using iron balls. The coat according to the invention showed a PEI-value of 3-4, which represents a good scratch and abrasion resistance.

### Examples

The invention will be elucidated with reference to the following examples. These examples are intended to illustrate the invention but are not to be construed as limiting in any manner the scope thereof.

### Preparation of compositions

A primer composition was prepared from 25 wt.% monofunctional acrylate monomer, 5 wt.% adhesion improving additive, 15 wt% difunctional acrylate monomer 5 wt.% photoinitiator, and 50 wt.% of an epoxy and/or urethane acrylate resin.

A hardener composition was prepared from 100% isocyanate functional oligomer

A filler composition was prepared from 45 wt.% polyester acrylate resin, 10% wt.% anti-settling agent, 2 wt.% photoinitiator, 10 wt.% tripropyl glycol diacrylate monomer, and 33 wt.% epoxy acrylate resin.

An abrasion resistant sealer composition was prepared from 25 wt.% polyester acrylate resin, 0.2 wt.% anti-settling agent, 15 wt.% aluminium oxide, 4 wt.% photoinitiator, 45 wt.% urethane acrylate resin, 11 wt.% difunctional acrylic monomer, 0.1 wt.% levelling agent, and 0.05 wt.% anti-foaming agent.

A clear sanding sealer composition was prepared from 25 wt.% polyester acrylate resin, 0.2 wt.% anti-settling agent, 15 wt.% talcum powder, 4 wt.% photoinitiator, 45 wt.% urethane acrylate resin, 11 wt.% difunctional acrylic monomer, 0.1 wt.% levelling agent, and 0.05 wt.% anti-foaming agent.

A white pigmented sanding sealer composition was prepared from 25 wt.% epoxy acrylate resin, 0.5 wt.% anti-settling agent, 20 wt.% calcium carbonate powder, 30 wt% zinc sulphide, 4 wt.% photoinitiator, 31 wt.% tripropyl glycol diacrylate monomer, 0.1 wt.% levelling agent, and 0.05 wt.% anti-foaming agent

A clear converter composition was prepared from 25 wt.% epoxy acrylate resin, 50 wt.% calcium carbonate, 10% urethane acrylate resin, 5 wt.% monofunctional acrylate monomer, 10 wt.% photoinitiator

A pigmented paste composition was prepared from 40 wt.% epoxy acrylate resin, 5 wt.% wetting and dispersing additive, 25% difunctional acrylic monomer, 30 wt.% pigment

A top coating composition was prepared from 45 wt.% urethane acrylate resin, 45 wt.% grafted nano-silica and/or surface-modified synthetic Si02-nanospheres, 1 wt.% polypropylene wax, 5 wt.% photoinitiator, 0.025 wt.% bluish pigment, and 4 wt.% 1,6-hexanediol diacrylate diluent.

### Coated substrate 1

Sample 1 consisted of reconstructed tile. A coating system was applied to this sample using some of the compositions listed above.
The UV-curable primer coat was applied to the tile by roller coater at 20-25 g/m². The primer coat was cured to the extent that it was still tacky after this curing step.
Then, by roller coating, the filler was applied at 80 g/m². The filler was half cured by UV-irradiation.
The sanding sealer was applied by reverse roller coating at 50-60 g/m². After a full UV-cure the surface was sanded.
Finally, the top coat was applied by roller coater at 30 g/m², and the top coat was fully cured by UV-irradiation.

### Coated substrate 2

Sample 2 consisted of reconstructed tile A coating system was applied to this sample using some of the compositions listed above.
The UV-curable primer coat was applied to the tile by roller coater at 20-25 g/m². The primer coat was cured to the extent that it was still tacky after this curing step.
Then, by roller coating, the filler was applied at 50 g/m². The filler was half cured by UV-irradiation.
The white pigmented sealer was applied, after 1:1 combination with the hardener composition, by reverse roller coating at 60 g/m². After a full UV-cure the surface was sanded.
A coloured pigmented sealer, obtained from the combination of 70 wt.% of the clear converter composition with 30 wt.% of the pigmented paste was applied, after 1:1 combination with the hardener composition, by reverse roller coating at 40 g/m². After a full UV-cure the surface was sanded.

Finally, the top coat was applied by roller coater at 30 g/m², and it was fully cured by UV-irradiation.

### Coated substrate 3

Sample 3 consisted of reconstructed tile. A coating system was applied to this sample using the compositions listed above.
The UV-curable primer coat was applied to the tile by roller coater at 20-25 g/m². The primer coat was cured to the extent that it was still tacky after this curing step.
Then, by reverse roller coater, the abrasion resistant sealer was applied at 60 g/m². The sealer was half cured by UV-irradiation.
The clear sanding sealer was then applied by reverse roller coating at 50-60 g/m². After a full UV-cure the surface was sanded.
Next, the top coat was applied by roller coater at 30 g/m², and it was fully cured by UV-irradiation.

### Performance testing

The coated substrates 1, 2 and 3 were tested in accordance with Italian standard UNI 9427/89. The samples showed good UV-resistance. They also showed good chemical resistance.
The resistance to household cleaning agents was tested in accordance with Italian standard PTP 53/95. The coating proved to be resistant to well-known cleaning agents like Ajax, ammonia (10% solution in water), alcohol, Viakal, Spic & Span, Cif, and Pronto.
The resistance to frequently used liquids was tested in accordance with European standard EN 12720/97. The coats proved to be resistant to liquids such as acetic acid, acetone, ammonia, red wine, citric acid, detergents, coffee, ethanol, ethyl-butyl acetic acid, olive oil, sodium carbonate, sodium chlorate, tea, water, and beer.

The coated substrates were tested in accordance with European standards EN 12721/97 and EN 12722/97. The samples showed good heat resistance in wet and in dry condition. The samples were tested at temperatures between 55°C and 100°C.

Each of the three coated substrates showed good steam resistance. The resistance to steam at 60 °C was tested in accordance with Italian standard PTP 19/95 for 15 minutes up to 240 minutes.

The scratch resistance of the samples was tested in a PEI test in accordance with EN ISO 10545.7. The sample showed a value of 3-4, which implies that the samples show a good scratch and abrasion resistance.

## Claims

1. Reconstituted mineral comprising substrates coated with a composition comprising silica and/or alumina particles, a substantially silicon-free polymerisable compound, and a silane of the general formula (I):
R¹-Si(OR)₃
wherein
- R¹ is a substantially silicon-free polymerisable group
- R is a hydrocarbon radical

2. A coated substrate according to claim 1, **characterised in that** R¹ is a carbonyl-functional, amine-functional, amide-functional, hydroxy-functional, isocyanate-functional, mercapto-functional, vinylether-functional, carbonate-functional group, anhydride-functional, epoxy-functional, acryloxy-functional, vinyl-functional, or a glycidoxy-functional group, a malonate group, an acetoacetate group or an oxidatively drying group.

3. A coated substrate according to claim 1 or 2, **characterised in that** R¹ is an acryloxy-functional, vinyl-functional or glycidoxy-functional group.

4. A coated substrate according to any one of claims 1 to 3, **characterised in that** R is a methyl or ethyl radical.

5. A coated substrate according to any one of claims 1 to 4, **characterised in that** the coating composition is radiation curable.

6. A coated substrate according to any one of claims 1 to 5, **characterised in that** the coating composition has a silica content of 1 to 30% by weight.

7. A coated substrate according to any one of claims 1 to 6, **characterised in that** the silica and/or alumina particles have an average diameter of between 5 and 100 nm.

8. A coated substrate according to any one of claims 1 to 7, **characterised in that** the coating composition comprises a diluent.

9. A coated substrate according to claim 8, **characterised in that** the diluent is 1,6-hexanediol diacrylate or tripropylene glycol diacrylate.

10. A coated substrate according to any one of claims 1 to 9, **characterised in that** the coating composition is a top coat.

11. A coated substrate according to any one of claims 1 to 10, **characterised in that** the substrate is covered with a pattern prior to the application of the coating composition.

12. A coated substrate according to claim 11, **characterised in that** the pattern comprises plastic, silk screen or paper.
